# EUROPÄISCHE PATENTSCHRIFT

(11) **EP 2 139 817 B1**
(45) Veröffentlichungstag und Bekanntmachung des Hinweises auf die Patenterteilung: **04.04.2012**
(21) Anmeldenummer: 08735228.2
(22) Anmeldetag: 14.04.2008
(51) Int. Cl.: C02F 1/461, C02F 1/76, C02F 1/28, C02F 1/42, C02F 1/467

(54) **VERWENDUNG VON ELEKTROCHEMISCH BEHANDELTEM WASSER ALS DESINFEKTIONSMITTEL**
USE OF ELECTROCHEMICALLY TREATED WATER AS A DISINFECTION AGENT
UTILISATION D' EAU TRAITÉE ÉLECTROCHIMIQUEMENT COMME AGENT DÉSINFECTANT

(30) Priorität: 13.04.2007 DE 102007017502
(43) Veröffentlichungstag der Anmeldung: 06.01.2010
(73) Patentinhaber: aquagroup AG, 93055 Regensburg (DE)
(72) Erfinder: CZECH, Manuel, 93093 Donaustauf (DE); PHILIPPS, André, 93047 Regensburg (DE); SAEFKOW, Michael, 74189 Weinsberg (DE)
(74) Vertreter: Bublak, Wolfgang
(86) Internationale Anmeldenummer: PCT/EP2008/002950
(87) Internationale Veröffentlichungsnummer: WO 2008/125324

(56) Entgegenhaltungen:
- EP-A- 0 027 278
- EP-A- 0 175 123
- EP-A- 0 803 476
- DE-A1- 19 717 579
- JP-A- 2005 329 331
- US-A- 5 008 011
- US-A- 5 620 587
- US-A- 5 843 291
- US-A1- 2007 000 846

## Beschreibung

Die vorliegende Erfindung betrifft die Verwendung von elektrochemisch behandeltem Wasser, als Desinfektionsmittel.

Die elektrolytische Zersetzung wässriger Natriumchloridlösungen wird seit dem Ende des 19. Jahrhunderts großtechnisch zur Gewinnung von Natronlauge und Chlor eingesetzt. Dieses als Chloralkalielektrolyse bezeichnete Verfahren wird vorzugsweise als Diaphragmaverfahren durchgeführt, bei dem eine poröse, stromdurchlässige Scheidewand (Diaphragma) den Anodenraum vom Kathodenraum abtrennt. Durch Durchführung lediglich einer schwachen Elektrolyse und dadurch, dass die Elektrolysezelle kontinuierlich betrieben wird, ist es möglich, dass nicht die Natronlauge- bzw. Chlorproduktion im Vordergrund steht, sondern die Bildung von partiellen Oxidationsprodukten im Anodenraum bzw. Reduktionsprodukten im Kathodenraum. So entwickelte Vitold Bakhir eine kontinuierliche Elektrolysevorrichtung nach dem Diaphragmaverfahren, auch Elektrodiaphragmalyse genannt, (Urheberschein der UdSSR 882944). Beim Durchlauf einer Natriumchloridlösung durch die Anodenkammer bilden sich demzufolge oxidierende Substanzen, wie Chlor (in geringen Mengen), Hypochlorit, Chlorit, Chlordioxid, Chlorat und andere Oxidationsmittel. Einige der wichtigsten Reaktionen der wässrigen Kochsalzlösung an der Anode sind nachfolgend dargestellt:

2 Cl⁻ - 2e⁻ → Cl₂

Cl⁻+H₂O-2e⁻→ HOCl + H⁺

Cl⁻ + 2 H₂O- 4 e⁻ → HOClO + 3 H⁺

HCl + 2H₂O - 5e⁻ → ClO₂+5H⁺

Cl' + 6 OH⁻- 6 e⁻ → ClO₃⁻ + 3 H₂O

Cl⁻ + 4 OH⁻ - 5e⁻→ ClO₂ + 2 H₂O

Cl⁻+2OH⁻-2e⁻→ ClO⁻+H₂O

Cl'+2H₂O-5e⁻→ ClO₂+4H⁺

Falls bei der Herstellung Leitungswasser eingesetzt wird, müssen vor der Elektrolyse die vorhandenen Calciumionen entfernt werden, da dies zu Funktionsstörungen durch Kalkabscheidung, insbesondere am Diaphragma, führen kann. Solch ein Verfahren zum Enthärten von Leitungswasser wird von der Siemens AG in der EP 175 123 A beschrieben.

Diese elektrochemisch behandelten Wasser können durch das Oxidationsvermögen der darin enthaltenen Oxidationsprodukte in einem breiten Anwendungsgebiet zur Desinfektion und Sterilisation eingesetzt werden. Sie sind zwar sehr wirksam, allerdings wirkt sich die Gegenwart der verschiedenen oxidierenden Verbindungen, wie der Chlorverbindungen, bei vielen Anwendungen, z.B. in der Fischindustrie und Lebensmittelindustrie, negativ aus. Es ist somit die Aufgabe der vorliegenden Erfindung, diesen Nachteil des Standes der Technik zu überwinden.

### Zusammenfassung der Erfindung

Gelöst wurde diese Aufgabe durch den überraschenden Befund, dass selbst nach Entfernen aller oxidierenden Verbindungen aus einer mit Elektrodiaphragmalyse behandelten Natriumchloridlösung die desinfizierende Wirkung nicht beeinträchtigt wird. Die Erfindung stellt demgemäß die Verwendung von elektrochemisch behandeltem Wasser als Desinfektionsmittel zur Verfügung, das vorzugsweise im Wesentlichen frei von Oxidationsmitteln ist.

Da die desinfizierende Wirkung auch nicht auf anderen Desinfektionsmitteln, wie Aldehyden, Alkoholen, Phenolen, Halogenaminen, Hypochlorit/Chlor, Persäuren, quaternären Ammonium-Verbindungen (QAC) und anderen synthetischen Mitteln, basiert, ist das erfindungsgemäße Wasser besonders umweltverträglich, für höhere Lebewesen nicht giftig und somit auch in sensitiven Anwendungen, wie zum Beispiel auf Lebensmitteln sowie der Medizin, anwendbar.

Die Wirkungsweise des Wassers unterscheidet sich grundlegend von der bisher angenommenen Wirkungsweise der klassischen der Erzeugnisse einer Elektrolyse bzw. Elektrodiaphragmalyse. Es wurde bisher angenommen, dass bei diesen Verfahren Natriumhypochlorit und andere Oxidantien für die desinfizierende Wirkung verantwortlich sind, wobei angenommen wird, dass die Oxidantien bei Verwendung oxidierend auf die Umgebung reagieren und z.B. bakterielle Zellmembranen denaturieren.

Da diese oxidierenden Verbindungen im Wasser entfernt wurden, muss im erfindungsgemäßen Wasser ein anderer Wirkmechanismus vorliegen. Es wird angenommen, dass die Wirkung des Wassers auf der Anregung des Wassermoleküls selbst beruht. Die Wassermoleküle befinden sich in einem Clusterverbund, so dass durch Durchführung einer schwachen Elektrolyse Wassermoleküle elektrisch entladen werden und die erzeugten Ladungsträger im Clusterverbund durch ständigen Austausch stabilisiert sind. Das elektrisch entladene Wasser kann daher dennoch desinfizierend wirken, da es imstande ist, Zellstrukturen zu denaturieren bzw. die Elektronentransport-Mechanismen von Mikroorganismen unwiderruflich zu stören. Dies ist einer der Gründe für die fehlenden Resistenzbildungen von Mikroorganismen gegenüber dem Wasser.

Wegen der fehlenden Zerlegung des Wassers in der durchgeführten schwachen Elektrolyse kann das Wasser vorzugsweise mit einem pH von 7 hergestellt werden. Dies ist insbesondere bei der Anwendung in pH-sensitiven Anwendungen, wie der Fischzucht und an und auf Lebensmitteln, besonders bevorzugt.

Das Wasser hat eine umfassende Wirkung gegen Bakterien, Pilze, Viren und Prionen (Beispiele: Staphylococcus aureus, Bacillus pynocyaneus, E-scherichia coli, Salmonellen, Bakterien-Sporen, Hepatitis-B Virus, Poliomyelitis Virus, HIV, Adenoviren, Hautpilze, Legionellen). Verschiedene Algenarten werden ebenfalls sicher abgetötet.

Insofern ist es für eine Vielzahl Anwendungen geeignet. Beispielsweise kann das Wasser zur Desinfektion, Sterilisation, Keimverminderung, Konservierung oder Desodorierung in einem breiten Anwendungsgebiet verwendet werden. Einsatzgebiete liegen beispielsweise im Bereich der Sterilisation medizinischer Geräte, Leitungen in der Lebensmittelindustrie, Keimreduzierung in und auf Lebensmitteln, in Brauereien und in der Entkeimung von Fischteichen.

Durch die gute Verträglichkeit, den fehlenden Geruch und den fehlenden Geschmack ist auch ein Einsatz des Wassers in der Prophylaxe und Behandlung menschlicher und tierischer Erkrankungen möglich. Beispielsweise lässt sich erfindungsgemäßes Wassers zur Behandlung oberflächlicher bakterieller und/oder pilzlicher Hauterkrankungen, zur Behandlung von Körperhöhlen und Wunden oder als Mundspüllösung verwenden.

### Detaillierte Beschreibung der Erfindung ist mittels folgender

Die erfindungsgemäße Verwendung wird in Anspruch 1 beschreiben.

Der Begriff Anolyt beschreibt die Flüssigkeit, die aus dem Anodenraum erhalten wird. Gemäß der Erfindung wird nur der Anolyt zur Herstellung des Wassers verwendet, während der Katholyt, also die Flüssigkeit aus dem Kathodenraum, verworfen wird. Das im Folgenden besprochene Wasser bezieht sich demzufolge nur auf den Anolyten.

Unter dem Begriff "in Schritt a) entstandenen Oxidantien" werden diejenigen Oxidationsmittel verstanden, die sich durch Durchführung eines Sorptionsschritts an Aktivkohle aus dem elektrolysierten Wasser entfernen lassen. Unter einem "Oxidationsmittel" werden chemischen Verbindungen oder Elemente verstanden, die ein positives Standardpotential aufweisen.

In einer alternativen Definition werden unter "in Schritt a) entstandenen Oxidantien" diejenigen durch das Elektrolysieren von Wasser entstehenden und desinfizierend wirkenden Oxidationsprodukte verstanden, die sich durch Durchführung eines Sorptionsschritts an Aktivkohle aus dem elektrolysierten Wasser entfernen lassen.

In noch einer weiteren, alternativen Definition werden unter "in Schritt a) entstandenen Oxidantien" diejenigen durch das Elektrolysieren von Wasser entstehenden und desinfizierend wirkenden Oxidationsprodukte verstanden, die Wasserstoffperoxid, Ozon und Singulett-Sauerstoff sind oder die neben Wasserstoff und Sauerstoff auch aus anderen Elementen bestehen.

Beispiele von "in Schritt a) entstandenen Oxidantien" sind Chlor, Hypochlorit, Chlorit, Chlordioxid, Chlorat, Brom, Bromit, Hypobromit, Bromdioxid, Iod, Iodit, Iodat, Periodat, Wasserstoffperoxid und andere Peroxide, Percarbonsäuren, Percarbonate, Persulfate, Perborate und Ozon.

Im Folgenden und in den Patentansprüchen werden die Begriffe "in Schritt a) entstandenen Oxidantien" und "Oxidantien" synonym verwendet.

Das Desinfektionsmittel weist eine desinfizierende Wirkung gegenüber Bakterien, Bakteriensporen, Pilzen, Pilzsporen, Viren, Algen, Prionen oder Mischungen davon auf. Vorzugsweise ist die Gesamtkonzentration an in Schritt a) entstandenen Oxidantien kleiner als 0,02 ppm; es ist insbesondere im Wesentlichen frei von Oxidantien.

Unter dem Begriff "zu den Desinfektionsmitteln gehörenden Oxidantien" werden diejenigen Oxidationsmittel verstanden, die eine desinfizierende, entkeimende, keimhemmende, bakterizide, bakteriostatische, fungizide, sporozide, antivirale, algizide, gegen Prionen gerichtete oder ähnliche Wirkung aufweisen. Beispiele solcher Oxidationsmittel sind Chlor, Hypochlorit, Chlorit, Chlordioxid, Chlorat, Brom, Bromit, Hypobromit, Bromdioxid, Iod, Iodit, Iodat, Periodat, Wasserstoffperoxid und andere Peroxide, Percarbonsäuren, Percarbonate, Persulfate, Perborate und Ozon und dergleichen.

Unter dem Begriff "im Wesentlichen frei von Desinfektionsmitteln" wird verstanden, dass die Konzentrationen an Desinfektionsmitteln so gering ist, dass sie nicht desinfizierend, entkeimend, keimhemmend, bakterizid, bakteriostatisch, fungizid, sporozid, antiviral, algizid, gegen Prionen oder ähnlich wirken.

Beispiele von Desinfektionsmitteln schließen Aldehyde, Alkohole, Phenole, Halogenamine, quaternären Ammonium-Verbindungen (QAC) und dergleichen ein.

Die Oxidantien werden durch ein geeignetes Sorbens im Anschluss an die elektrochemische Behandlung entfernt. Bevorzugt wird Aktivkohle eingesetzt, aber auch andere Sorbentien wie Aluminiumoxid, Siliciumoxid oder Zeolithe oder Kombinationen davon sind geeignet.

Das so erhaltene Wasser kann zur Herstellung von Desinfektionsmittel dienen. Der Gehalt an Oxidantien liegt dann in einem Bereich kleiner als 0.2 ppm, vorzugsweise kleiner als 0.02 ppm . Der pH-Wert der so erhaltbaren Desinfektionsmittel liegt im Bereich von 4 bis 9, vorzugsweise zwischen 5 und 8, besonders bevorzugt zwischen 6 und 8, und insebesondere pH 7.

Die Menge des zur Entfernung der bei der Elektrolyse entstandenen Oxidantien notwendigen Sorbens hängt von der elektrochemischen Behandlung, der gewünschten Endkonzentration an verbleibenden Oxidantien, der Fließgeschwindigkeit durch das Sorptionsmedium und der Sorptionsqualität des Sorptionsmediums ab und kann vom Fachmann geeignet gewählt werden.

Die Sorptionsqualität von Aktivkohle kann durch die sogenannte Halbwertsstrecke gekennzeichnet werden. Die Halbwertsstrecke bezeichnet die Strecke, die eine sorbierende Substanz bei einer gegebenen Durchflussgeschwindigkeit zurücklegen muss, damit ihr Gehalt um die Hälfte reduziert wird. Geeignete Aktivkohle weist eine Halbwertsstrecke im Bereich von 10 bis 0,05 cm, bevorzugt von 5 bis 0,1 cm, auf, bei einer Durchflussgeschwindigkeit von z.B. 10m/Stunde. Eine Aktivkohle, die eine Halbwertsstrecke in diesem Bereich aufweist, ist zum Beispiel eine aus Kokosnussschalen hergestellte Aktivkohle. Auch andere Aktivkohlearten sind geeignet, z.B. aus Steinkohle, Braunkohle oder Torf hergestellte.

Die Elektrolyse wird vorzugsweise unter Verwendung eines Diaphragmas durchgeführt (Elektrodiaphragmalyse). Als Diaphragma eignet sich z.B. sulfoniertes PTFE.

Die Wahl der Elektrolysebedingungen sind nicht besonders beschränkt und kann vom Fachmann durch Wahl geeigneter Parameter durchgeführt werden. Regelbare Parameter schließen insbesondere ein: Stromaufnahme, Durchflussrate des Elektrolyts, Salzgehalt des Elektrolyts, Prozesswasserzufluß und Reaktorspannung. Um eine Elektrolyse bei der gewünschten Stromdichte zu ermöglichen, enthält das elektrochemisch zu behandelnde Wasser bevorzugt Alkalimetallkationen und halogenhaltige Anionen, schwefelhaltige Anionen, phosphorhaltige Anionen, Carboxylate, Carbonate, Mischungen davon und andere Salze, die einen Stromfluss ermöglichen. Salze von Erdalkalimetallionen sind prinzipiell auch geeignet, jedoch nicht bevorzugt, da Erdalkalimetallionen die Elektrolyse stören können, insbesondere durch Ablagerungen an dem Diaphragma. Besonders bevorzugt wird eine Kochsalzlösung eingesetzt, die im Wesentlichen frei von Calciumionen ist.

Im einfachsten Fall erfolgt die Sorption der Oxidantien durch Filtration über Aktivkohle. Der produzierte Elektrolyt kann mit einer auf den Aktivkohletyp optimierten Durchflußgeschwindigkeit, z.B. 10 m/h, durchgeleitet werden. Filtrationsdruck und Fließgeschwindigkeit können kontrolliert und mittels Pumpen gesteuert werden. Das Filtrat kann auf Reinheit online geprüft werden und die Filtration kann nach vorgegebenen Parametern gesteuert werden.

Falls nötig, kann ein Ionenaustauscher zur Entfernung der Calciumionen vorgeschaltet werden.

### Vergleichsbeispiel 1

Es wurde eine gesättigte Kochsalzlösung aus enthärtetem Trinkwasser (0° dH) und Kochsalz gemäß EN973 hergestellt. Die gesättigte Kochsalzlösung wird mittels einer elektronisch kontrollierten Pumpe dem Prozesswasser (enthärtetes (0° dH) Trinkwasser) zugeführt, um einen Elektrolyt definierter Leitfähigkeit zu erzeugen. Dieser Elektrolyt wird in einem elektrochemischen Reaktor einer schwachen Elektrolyse (Diaphragmalyse) unterworfen und anschließend der Anolyt der Vorrichtung entnommen.

### Herstellungsbeispiel 1

Es wurde wie in Vergleichsbeispiel 1 verfahren, außer dass der der Vorrichtung entnommene Anolyt in einem zweiten nachfolgenden Schritt einer Filtration über aus Kokosnussschalen hergestellter Aktivkohle unterworfen wurde.

### Tests

Die Anolyten wurden mit enthärtetem und über Aktivkohle gefiltertem Trinkwasser (0° dH) auf 10 % verdünnt und anschließend auf die Anwesenheit von Chlor, Hypochlorit, Chlorit, Chlordioxid, Chlorat, Ozon und H₂O₂ analysiert und mikrobiologischen Tests unterzogen (Staphylococcus aureus mit einer Ausgangverkeimung von log5). Die Ergebnisse sind in der nachfolgenden Tabelle 1 dargestellt.

**Tabelle 1**

| | Vergleichsbeispiel 1 | Herstellungsbeispiel 1 |
|---|---|---|
| Konzentration an Oxidantien | 25 ppm | 0,02 ppm |
| KBE/ml | 0 | 0 |

Aus der Tabelle 1 ist ersichtlich, dass trotz der Entfernung desinfizierend wirkender Oxidantien wie Chlor, Hypochlorit, Chlorit, Chlordioxid, Chlorat, Ozon und H₂O₂ eine desinfizierende Wirkung gegeben ist, die vergleichbar zu der Wirkung von herkömmlichen Oxidantien enthaltenden Anolyten ist.

### In-vitro-Toxizität

Zur Abschätzung der toxikologischen Potenz des erfindungsgemäßen Wassers für den Menschen und einer potenziellen Abwassergefährdung wurden *in-vitro-*Biotests durchgeführt. Es wurden folgende Prüfverfahren herangezogen:
Akuter Leuchtbakterientest mit Vibrio fischeri (Hemmwirkung auf die Lichtemission) zur Abschätzung des toxischen Potentials von Abwässern, Sicker- Oberflächen- und Porenwässern nach DIN EN ISO 11348-2 (1998)
Chronischer Leuchtbakterientest mit Vibrio fischeri (Hemmwirkung auf das Wachstum) nach DIN EN ISO 38412-37 (1999)
Mutatox^{®} Gentoxizitäts-/Mutagenitätstest mit der nicht-leuchtenden Mutante M 169 von Vibrio fischen nach MACHEREY-NAGEL
Akute Zytoxizität an murinen Fibroblasten (L929-Zellen, ATCC CCL 1) mit der Neutralrot-Methode nach DIN EN 30993-5 (1994) zur biologischen Beurteilung von Medizinprodukten
Akute Zytoxizität an humanen Aminozellen (FL-Zellen, ATCC CC 62) mit der Neutralrot-Methode nach DIN EN 30993-5 (1994) zur biologischen Beurteilung von Medizinprodukteen
Chronische Zytoxizität an humanen Aminozellen (FL-Zellen, ATCC CC 62) mit der Neutralrot-Methode nach DIN EN 30993-5 (1994) zur biologischen Beurteilung von Medizinprodukteen
Akute Gewebetoxizität an Ratten-Peritonealgewebe im Explantattest
Chronische Gewebetoxizität an Ratten-Peritonealgewebe im Explantattest
Phytotoxizitätstest an der Wasserlinse (Lemna minor) nach ISO TC 147/SC 5 N (draft 2001)

### Akute Toxizität

Zellen von Mäusen (murine Fibroblasten) hielten eine Konzentration von 10% des Wassers gemäß Herstellungsbeispiel 1 für eine Zeitdauer von bis zu 60 Min. mit einer 100%igen Vitalität aus und behielten auch noch nach 180 Min. über 80% ihrer Vitalität. Kurzfristig, d.h. für 10 Minuten, wurde eine Konzentration von 25% toleriert.

Menschliche Amnion-Zellen tolerierten eine Konzentration von 10% für 10 Min. und eine Konzentration von 2% für 180 Min. Je nach Indikation und Einwirkungsdauer orientiert sich die maximale Konzentration an diesen Eckdaten.

### Chronische Toxizität

Die Daten der Tests auf chronische Toxizität (Einwirkdauer 24 h) ergeben eine Toleranz für 2 %-ige Lösungen des Wassers gemäß Herstellungsbeispiel 1.

### Mutagenität

Es gab keinen Hinweis auf Mutagenität des Wassers gemäß Herstellungsbeispiel 1. Es ist nicht mutagen.

### Phytotoxizität

Aus den Leuchtbakterientests und den Tests an der Wasserlinse Lemna minor ergibt sich eine Verträglichkeit des Wassers gemäß Herstellungsbeispiel 1 bei Konzentrationen < 2 %.

Aufgrund der Resultate der Untersuchungen an eukaryontischen Zellen kann das Wasser bei einer Konzentration von < 2 % sowohl bei kurzzeitiger als auch bei einer 24 h Applikation als gut verträglich eingestuft werden. Die Resultate der Gewebeexplantatstests weisen zwar darauf hin, dass unter praxisnahen Bedingungen eine höhere Konzentration bis zu 10% als unbedenklich gelten kann. Letztendlich maßgebend für die Einstufung sind jedoch die an humanen Zellen ermittelten Ergebnisse wegen der von ihnen gezeigten höchsten Sensitivität. Die Ergebnisse des Genotoxizitätstests weisen nicht auf ein mutagenes Potenzial von erfindungsgemäßes Wasser hin. Die gute Verträglichkeit bei Konzentrationen unterhalb von 2% sowie die antimikrobiell Wirksamkeit selbst bei einer Verdünnung von 1:105 sprechen jedoch für eine Anwendbarkeit in diesem Konzentrationsbereich. Aus den Leuchtbakterientests und dem Phytotoxizitätstest lässt sich für erfindungsgemäßes Wasser bei Konzentrationen < 0,1 % eine ökotoxikologische Unbedenklichkeit ableiten.

## Patentansprüche

1. Verwendung eines Desinfektionsmittel, erhältlich durch ein Verfahren, das **gekennzeichnet ist durch** die folgenden Schritte:
a) Elektrolysieren von Wasser und
b) Verringern der Konzentrationen der in Schritt a) entstandenen Oxidantien des Anolyten auf kleiner als 0,2 ppm,
und weiter **gekennzeichnet durch** eine desinfizierende Wirkung gegenüber Bakterien, Bakteriensporen, Pilzen, Pilzsporen, Viren, Prionen oder Mischungen davon,
wobei das Konzentrat einen pH-Wert von 4 bis 9 aufweist, zur Desinfektion, Sterilisation, Keinverminderung, Konservierung und/oder Desodorierung.

2. Verwendung nach Anspruch 1 **dadurch gekennzeichnet dass** der Gehalt an chlorhaltigen Oxidantien, Peroxiden und Ozon durch Verdünnen auf kleiner als 0,02 ppm gesenkt wird.

3. Verwendung nach einem der Ansprüche 1 oder 2, **dadurch gekennzeichnet, dass** es im Wesentlichen frei von Oxidantien ist.

4. Verwendung nach einem der Ansprüche 1 bis 3, wobei in Schritt b) die Oxidantien durch ein geeignetes Sorbens entfernt werden.

5. Verwendung nach Anspruch 4, wobei das Sorbens unter Aktivkohle, Aluminiumoxid, Siliciumoxid, Ionenaustauscher, Zeolith oder Mischungen davon gewählt ist.

6. Verwendung nach einem der Ansprüche 1 bis 5, wobei mittels Elektrodiaphragmalyse in Schritt a) elektrolysiert wird und die Lösung des Kathodenraums abgetrennt und verworfen wird.

7. Verwendung nach einem der Ansprüche 1 bis 6, wobei dem in Schritt a) zu elektrolysierenden Ausgangswasser zur Steigerung der Leitfähigkeit Salze, wie Salze aus Alkalimetallkationen und halogenhaltigen Anionen, schwefelhaltigen Anionen, phosphorhaltigen Anionen, Carboxylaten, Carbonaten, und Mischungen dieser Anionen, zugesetzt sind.

8. Verwendung nach Anspruch 7. wobei das in Schritt a) zu elektrolysierende Ausgangswasser Natriumchlorid enthält.

9. Verwendung nach einem der Ansprüche 1 bis 8, wobei das Verfahren kontinuierlich durchgeführt wird.

10. Verwendung gemäß einem der Ansprüche 1-9 in der Fischzucht oder der Fischverarbeitung, zur Leitungsdesinfektion im Brauereiwesen, in der Lebensmittelindustrie an oder in Lebensmitteln, zur allgemeinen Flächendesinfektion oder in medizinischen Einrichtungen.

## Claims

1. Use of a disinfectant-concentrate obtainable by a process which is **characterised by** the following steps:
a) electrolysis of water and
b) reduction to less than 0,2 ppm of the concentrations of the oxidants created in step a) of the anolyte,
and further **characterised by** a disinfecting effect on bacteria, bacterial spores, fungi, fungal spores, viruses, prions or mixtures thereof, the concentrate having a pH-value in the range of from 4 to 9, for disinfection, sterilization, germ-inhibition, conservation and/or deodorization.

2. Use according to claim 1, **characterised in that** the content of chlorine-containing oxidants, peroxides and ozone is lowered by dilution to in each case less than 0,02 ppm.

3. Use according to claim 1 or 2, **characterised in that** it is substantially free of oxidants.

4. Use according to any one of claims 1 to 3, whereby in step b) the oxidants are removed by an appropriate sorbent.

5. Use according to claim 4, whereby the sorbent is selected among activated carbon, aluminium oxide, silicon oxide, ion exchangers, zeolite or mixtures thereof.

6. Use according to any one of claims 1 to 5, whereby electrolysis is performed in step a) by way of electrodiaphragmalysis and the solution is separated from the cathode chamber and is rejected.

7. Use according to any one of claims 1 to 6, whereby to the original water to be electrolysed in step a) salts, such as salts from alkaline metal cations and halogen-containing anions, sulphur-containing anions, phosphorus-containing anions, carboxylates, carbonates and mixtures of these anions are added in order to increase conductivity.

8. Use according to claim 7, whereby the original water to be electrolysed in step a) contains sodium chloride.

9. Use according to any one of claims 1 to 8, whereby the process is carried out continuously.

10. Use according to any one of claims 1 to 9 in fish farming or fish processing, for the disinfection of ducts in the brewing industry, in the food industry on or in foodstuffs, for general surface disinfection or in medical apparatus.

## Revendications

1. Utilisation, pour la désinfection, la stérilisation, la diminution des germes, la conservation et/ou la désodorisation, d'un désinfectant pouvant être obtenu par un procédé **caractérisé par** les étapes suivantes :
a) électrolyse d'eau, et
b) diminution à une valeur inférieure à 0,2 ppm de la concentration des oxydants, obtenus dans l'étape a), de l'anolyte,
et **caractérisé en outre par** un effet désinfectant à l'encontre des bactéries, des spores bactériennes, des champignons, des spores fongiques, des virus, des prions ou des mélanges de ceux-ci, le concentré ayant un pH de 4 à 9.

2. Utilisation selon la revendication 1, **caractérisée en ce que** la teneur en oxydants chlorés, en peroxydes et en ozone, est abaissée par dilution à une valeur inférieure à 0,02 ppm.

3. Utilisation selon l'une des revendications 1 ou 2, **caractérisée par** l'absence presque complète d'oxydants.

4. Utilisation selon l'une des revendications 1 à 3, les oxydants étant dans l'étape b) éliminés à l'aide d'un sorbant approprié.

5. Utilisation selon la revendication 4, pour laquelle le sorbant est choisi parmi le charbon actif, l'oxyde d'aluminium, l'oxyde de silicium, les échangeurs d'ions, les zéolithes ou les mélanges de ceux-ci.

6. Utilisation selon l'une des revendications 1 à 5, pour laquelle on procède dans l'étape a) à une électrolyse par électrodiaphragmalyse, et on sépare et rejette la solution du compartiment cathodique.

7. Utilisation selon l'une des revendications 1 à 6, pour laquelle on ajoute à l'eau de départ, destinée à être électrolysée dans l'étape a), et pour augmenter la conductivité, des sels tels que les sels de cations de métaux alcalino-terreux et d'anions halogénés, d'anions sulfurés, d'anions phosphorés, de carboxylates, de carbonates et de mélanges de ces anions.

8. Utilisation selon la revendication 7, pour laquelle l'eau de départ devant être électrolysée dans l'étape a) contient du chlorure de sodium.

9. Utilisation selon l'une des revendications 1 à 8, pour laquelle le procédé est mis en oeuvre en continu.

10. Utilisation selon l'une des revendications 1 à 9, en pisciculture ou en transformation des poissons, pour la désinfection des conduites dans l'industrie brassicole, dans l'industrie des produits alimentaires sur ou dans les aliments, pour la désinfection générale des viandes, ou dans les établissements médicaux.
